Europäisches Patentamt

European Patent Office

Office européen des brevets

(11) Veröffentlichungsnummer: **0 119 648**
**A2**

# (12) EUROPÄISCHE PATENTANMELDUNG

(21) Anmeldenummer: **84200284.2**

(22) Anmeldetag: **01.03.84**

(51) Int. Cl.³: **C 10 J 3/02, C 10 J 3/54**

(30) Priorität: **22.03.83 DE 3310220**

(43) Veröffentlichungstag der Anmeldung: **26.09.84**
**Patentblatt 84/39**

(84) Benannte Vertragsstaaten: **DE FR GB NL**

(71) Anmelder: **METALLGESELLSCHAFT AG,**
**Reuterweg 14 Postfach 3724, D-6000 Frankfurt/M.1 (DE)**

(72) Erfinder: **Rudolph, Paul, Friedrichsdorfer Strasse 17,**
**D-6380 Bad Homburg (DE)**
Erfinder: **Hirsch, Martin, Roemerstrasse 7,**
**D-6382 Friedrichsdorf 4 (DE)**

(74) Vertreter: **Fischer, Ernst, Dr., Reuterweg 14,**
**D-6000 Frankfurt am Main 1 (DE)**

(54) Verfahren zum Vergasen fester Brennstoffe im Wanderbett und im Wirbelbett.

(57) Im Wanderbett werden grobkörnige feste Brennstoffe unter einem Druck von 5 bis 150 bar mit Sauerstoff, Wasserdampf und gegebenenfalls Kohlendioxid vergast. Dabei entsteht ein Produktgas mit Temperaturen von 250 bis 700 °C, das man auf Temperaturen im Bereich von 120 bis 220 °C kühlt, so dass sich ein wasserhaltiges Schwelprodukte enthaltendes Kondensat (Gaswasser) bildet. Das Gaswasser der Wanderbettvergasung wird mindestens teilweise entspannt; den gebildeten Entspannungsdampf leitet man in die Wirbelbettvergasung. Im Wirbelbett werden feinkörnige feste Brennstoffe bei niedrigerem als dem im Wanderbett herrschenden Druck vergast.

Der in das Wirbelbett geleitete Entspannungsdampf deckt den Bedarf an Wasserdampf in der Wirbelbettvergasung mindestens zur Hälfte. Der im Produktgas der Wirbelbettvergasung enthaltende Wasserdampf wird durch Kühlung kondensiert, das Kondensat wird getrennt vom Gaswasser der Wanderbettvergasung behandelt.

0119648

A 6888

METALLGESELLSCHAFT AG

Nr. 8976 LÖ

Frankfurt, 21.03.1983
-WGN/HSZ-

## Verfahren zum Vergasen fester Brennstoffe im Wanderbett und im Wirbelbett

Die Erfindung betrifft ein Verfahren zum Vergasen fester Brennstoffe mit Sauerstoff, Wasserdampf und gegebenenfalls Kohlendioxid enthaltenden Vergasungsmitteln im Wanderbett und im Wirbelbett, dabei vergast man grobkörnige feste Brennstoffe unter einem Druck von 5 - 150 bar im Wanderbett, das sich langsam nach unten bewegt, in das die Vergasungsmittel von unten eingeleitet und unter dem die unverbrennlichen mineralischen Bestandteile als feste Asche oder flüssige Schlacke abgezogen werden, und zieht aus der Wanderbett-Vergasung ein Produktgas mit Temperaturen von 250 - 700°C ab, kühlt das Produktgas auf Temperaturen im Bereich von 120 - 220°C und bildet dabei ein wasserhaltiges, Schwelprodukte enthaltendes Kondensat (Gaswasser), feinkörnige feste Brennstoffe werden im Wirbelbett bei niedrigerem als dem im Wanderbett herrschenden Druck vergast und ein Produktgas mit Temperaturen von 800 - 1200°C erzeugt.

Die Vergasung fester Brennstoffe, insbesondere Kohle, Braunkohle oder Torf, im Wanderbett (gelegentlich auch als Festbett bezeichnet) oder auch im Wirbelbett ist bekannt. Die Wanderbett-Vergasung ist z.B. in Ullmanns Encyclopädie der technischen Chemie, 4. Auflage (1977), Band 14, Seiten 383 - 386, dargestellt. Einzelheiten dieser bekannten Vergasungsmethode können den US-Patentschriften 3 540 867 und 3 854 895 entnommen werden. Die Vergasung fester Brennstoffe im Wanderbett mit Abzug flüssiger Schlacke ist in den britischen Patentschriften 1 507 905, 1 506 671 und 1 512 677 beschrieben. Aus der US-Patentschrift 4 347 064 und der deutschen Offenlegungsschrift 31 13 993 kennt man die Vergasung in der zirkulierenden Wirbelschicht. Ein gekoppeltes Verfahren, bei dem die Wanderbett- und die Wirbelbett-Vergasung zusammenwirken, ist in der deutschen Offenlegungsschrift 31 38 124 beschrieben.

Für die Vergasung im Wanderbett muß der körnige Brennstoff bevorzugt Korngrößen im Bereich von 3 - 80 mm aufweisen, damit das Bett genügend Gasdurchlässigkeit besitzt. Mit der Vergasung fester Brennstoffe im Wanderbett sind hohe Durchsatzleistungen und ein hoher Wirkungsgrad verbunden, doch ist das Rohgas reich an Schwelprodukten. Dies ist eine Folge der Anwendung des Gegenstromprinzips, welches dazu führt, daß die Temperaturen des Rohgases beim Verlassen des Brennstoffbettes relativ niedrig sind und zumeist im Bereich von etwa 300 - 650°C liegen. Bei diesen Temperaturen werden die im oberen Teil des Brennstoffbettes entweichenden Schwelprodukte, wie Teer, Öl, Naphtha, Phenole und Fettsäuren, nicht zersetzt, sondern bleiben im Rohgas, das den Gaserzeuger verläßt. Bei der anschließenden Kühlung des Rohgases kondensiert ein großer Teil dieser Schwelprodukte zusammen mit dem Wasserdampf und bildet ein Kondensat, das man Gaswasser nennt.

Das Gaswasser muß aus dem Verfahren abgezogen und aufgearbeitet werden. Dies geschieht in bekannter Weise z.B. in Anlagen zur Entfernung der Phenole durch Extraktion, zur Entfernung des Ammoniaks durch Strippen und zur endgültigen Entfernung von restlichen Phenolen und Fettsäuren in einer biologischen Reinigung.

Der Erfindung liegt nun die Aufgabe zugrunde, die Behandlung des Gaswassers zu vereinfachen. Dies geschieht beim eingangs genannten Verfahren erfindungsgemäß dadurch, daß man das Gaswasser der Wanderbett-Vergasung mindestens teilweise entspannt und den gebildeten Entspannungsdampf in die Wirbelbettvergasung leitet. Vor der Entspannung befindet sich das Gaswasser etwa unter dem Druck der Wanderbett-Vergasung.

Die Entspannung kann bevorzugt um mindestens 2 bar bis zu einem Druck erfolgen, der noch über dem Druck in der Wirbel-bett-Vergasung liegt.

Der wesentliche Bestandteil des Entspannungsdampfes ist Wasserdampf, der in der Wirbelbett-Vergasung als Vergasungsmittel wirkt. Außerdem werden der Wirbelbett-Vergasung noch Sauerstoff oder Luft zugeführt. Der Entspannungsdampf ent-hält Dämpfe von Phenolen, Fettsäuren und Ammoniak, die bei den im Wirbelbettreaktor herrschenden Temperaturen zusammen mit der Kohle vergast werden. Die Austrittstemperaturen des Rohgases aus der Wirbelbett-Vergasung liegen im Bereich von 800 bis 1200°C.

Mit dem in das Wirbelbett geleiteten Entspannungsdampf kann der Bedarf an Wasserdampf als Vergasungsmittel zu mindestens 50% gedeckt werden. Zweckmäßigerweise sorgt man dafür, daß die Menge an gebildetem Entspannungsdampf den gesamten Was-serdampfbedarf der Wirbelschichtvergasung decken kann. Darüber hinaus kann weiterer Entspannungsdampf in das Wirbelbett geleitet werden, dessen Wasserdampfanteil nicht mehr zersetzt und nur noch zur Konvertierungsreaktion während der Vergasung genutzt wird ($CO + H_2O = CO_2 + H_2$). Aber auch aus diesem Wasserdampf werden Phenole und Fettsäuren entfernt.

Nach Abkühlung des Rohgases der Wirbelbett-Vergasung fällt ein Kondensat an, das frei von organischen Bestandteilen ist und allenfalls noch einen geringen Anteil an anorganischen Stoffen enthält. Dieses wäßrige Kondensat kann mit den gleichen Verfahren, wie man sie für übliches Frischwasser anwendet, zu Kühlwasser oder Speisewasser aufbereitet werden.

Die Menge an gebildetem Entspannungsdampf steigt mit der Menge an zu entspannendem Gaswasser und sie wächst mit der Temperaturdifferenz, die das Gaswasser vor und nach der Kondensation aufweist. Deshalb ist es vorteilhaft, von dem nach der Entspannung übrigbleibenden Gaswasser möglichstviel bei
möglichst hoher Temperatur in das aus dem Wanderbett-Vergaser
kommende heiße Rohgas einzusprühen. Das Einsprühen erfolgt
üblicherweise in einem an den Vergasungsreaktor angeschlossenen Waschkühler. In diesem Waschkühler wird hierdurch das Rohgas gekühlt und mit Wasserdampf gesättigt. In einem anschließenden Abhitzekessel zieht man das gebildete Gaswasser ab. Um die
Temperatur des noch nicht entspannten Gaswassers nach dem Verlassen des Waschkühlers möglichst hoch zu halten und dadurch
beim Teilentspannen möglichst viel Entspannungsdampf zu erzeugen, kann man das zum Waschkühler zurückzuführende Gaswasser erhitzen, wobei sich Abwärme verwerten läßt. Auf diese
Weise steht stets eine große Menge an Gaswasser mit genügend
hoher Temperatur zum Entspannen oder Teilentspannen zur Verfügung.

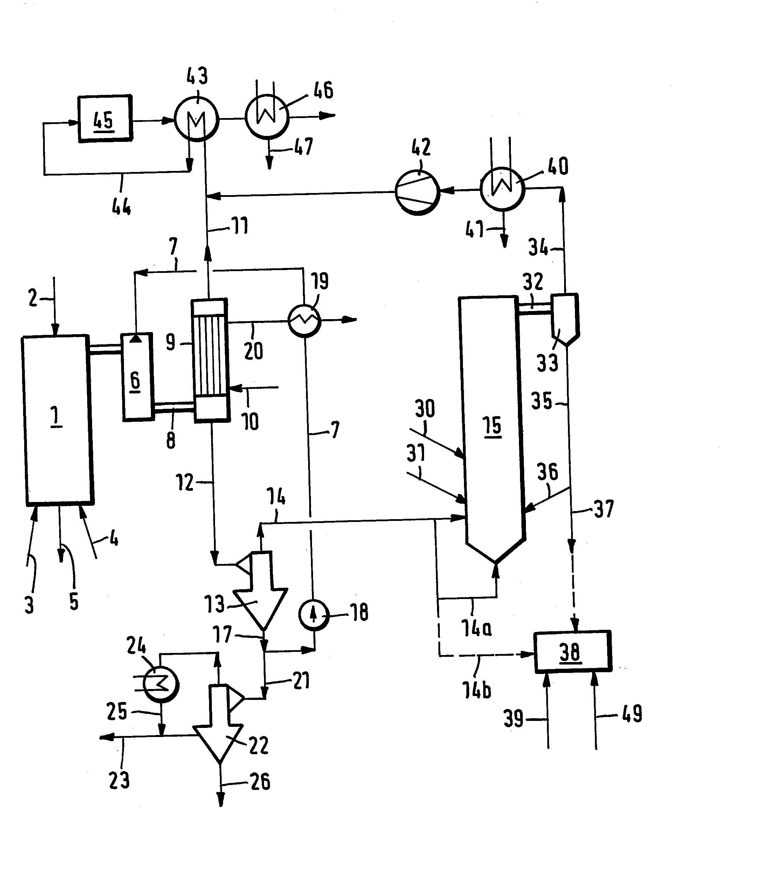

Die Zeichnung zeigt Ausführungsmöglichkeiten des Verfahrens.

Im Vergasungsreaktor 1 wird körnige Kohle aus der Leitung 2
in an sich bekannter Weise im Wanderbett unter einem Druck
von 5 bis 150 bar vergast, wobei man von unten durch die
Leitung 3 Wasserdampf und durch die Leitung 4 Sauerstoff oder
auch Luft zuführt. Unverbrennliche Bestandteile werden durch
die Leitung 5 entfernt. Das Rohgas der Vergasung wird in
einem Waschkühler 6 mit Gaswasser aus der Leitung 7 intensiv
in Berührung gebracht und dabei auf Temperaturen im Bereich
von 140 bis 230°C gekühlt, wobei eine Aufsättigung mit Wasserdampf erfolgt. Durch die Leitung 8 gelangt das wasserdampfhaltige Rohgas zusammen mit erwärmtem Gaswasser zum Abhitzekessel 9, wo das Rohgas weiter indirekt gekühlt wird. Als
Kühlmittel dient Speisewasser aus der Leitung 10, der gebildete Wasserdampf wird in der Leitung 20 abgezogen. Das Produktgas verläßt den Abhitzekessel 9 durch die Leitung 11.

Im Sumpf des Abhitzekessels 9 sammelt sich Gaswasser mit
Temperaturen im Bereich von 120 bis 220°C, das noch etwa
unter dem Druck steht, wie er auch im Vergasungsreaktor 1
herrscht. Dieses Gaswasser fließt in der Leitung 12 zu einem Entspannungsbehälter 13, wo eine Entspannung auf einen um mindestens 2 bar niedrigeren Druck erfolgt; der Druck nach der Entspannung ist etwas höher als der Druck in der Wirbelbettvergasung 15. Der beim Entspannen gebildete Dampf, der vor allem aus Wasserdampf besteht, wird ohne weitere Verdichtung durch die Leitung 14 in den Reaktor 15 der Wirbelbettvergasung geleitet. Ein Teilstrom dieses Entspannungsdampfes kann über die Leitung 14a der Wirbelbettvergasung oder auch über die Leitung 14b einer Wirbelbett-Verbrennung 38 zugeführt werden.

Im Entspannungsbehälter 13 sammelt sich teilentspanntes und dabei gekühltes Gaswasser, das in der Leitung 17 abfließt. Mit Hilfe der Pumpe 18 wird ein Teil dieses Gaswassers durch die Leitung 7 zurück zum Waschkühler 6 geführt, dabei erfolgt eine Erhitzung im Wärmeaustauscher 19, der von Wasserdampf aus der Leitung 20 gespeist wird, den man im Abhitzekessel 9 erzeugte. Restliches Gaswasser leitet man in der Leitung 21 zu einem weiteren Entspannungsbehälter 22, wo die Entspannung etwa bis auf Atmosphärendruck erfolgt. Das entspannte Gaswasser wird in der Leitung 23 zur Weiterbehandlung und insbesondere Entphenolung geführt, zusammen mit kondensiertem Entspannungsdampf, der über den Kühler 24 und die Leitung 25 zugegeben wird. Teer wird in der Leitung 26 abgezogen und kann ebenfalls der Wirbelbettvergasung 15 aufgegeben werden.

Im Vergasungsreaktor 15 erfolgt die Vergasung feinkörniger fester Brennstoffe mit Korngrößen unter 5 mm und vorzugsweise unter 2 mm, die durch die Leitung 30 eingespeist werden. Im Reaktor 15 vergast man diese Brennstoffe mit Hilfe von Sauerstoff aus der Leitung 31 und Wasserdampf aus den Leitungen 14 und 14a in der Wirbelschicht und insbesondere in der bei hohen Wirbelgasgeschwindigkeiten arbeitenden zirkulierenden Wirbelschicht. Hierbei verlassen Produktgas und Feststoffe den Reaktor 15 durch die Leitung 32 und werden im Abscheidezyklon 33 getrennt. Das Produktgas strömt in der Leitung 34 ab und die Feststoffe fließen in den Leitungen 35 und 36 zum größten Teil zurück in den Wirbelbereich des Reak-

tors 15. Ein Teil der Feststoffe, die durch Vergasung im Reaktor 15 einen verminderten oder nur noch geringen Kohlenstoffgehalt aufweisen, wird in der Leitung 37 abgezogen.

Der für die Vergasung im Wirbelbettreaktor 15 benötigte Wasserdampf kommt aus dem Entspannungsbehälter 13. Die Vergasung im Wirbelbett, z.B. in der hier bevorzugten zirkulierenden Wirbelschicht, wird mit einem Wasserdampf/Sauerstoff-Verhältnis von im allgemeinen 0,8 bis 1,3 durchgeführt. Dieses Wasserdampf/Sauerstoff-Verhältnis wird u.a. durch die Ascheeigenschaften bestimmt und ist auch abhängig davon, ob man bei der Durchführung der Wirbelbettvergasung Ascheagglomerate oder feinkörnige Asche erzeugen will. Man kann aber darüber hinaus eine größere Wasserdampfmenge zuführen, was entweder über die Leitung 14 oder gesondert über die Leitung 14a erfolgen kann. Dieser Überschußdampf nimmt allerdings nur noch wenig an den Vergasungsreaktionen teil und verläßt den Reaktor 15 zum größten Teil unzersetzt. Jedoch werden die im Entspannungsdampf enthaltenen Phenol- und Fettsäuredämpfe und andere Dämpfe von Schwelprodukten, die im Gaswasser enthalten sind, im Reaktor 15 vergast und tragen so zur zusätzlichen Erzeugung von Gas bei. Die in Form des Entspannungsdampfes verbrauchte Gaswassermenge entlastet außerdem die sonst notwendige Reinigung des Gaswassers durch verschiedene Verfahren, z.B. die Entphenolung. Dem Wirbelbettreaktor 15 für die Vergasung können auch Teer aus dem Behälter 22 oder Öle oder Phenole, die an hier nicht dargestellten Stellen des Verfahrens der Wanderbettvergasung anfallen, als Brennstoffe zugeführt werden und so den Kohlebedarf über die Leitung 30 entsprechend entlasten.

In an sich bekannter Weise kann man die Feststoffe der Leitung 37 zu einer gestrichelt eingezeichneten Verbrennung 38 führen. Dieser Verbrennung kann man neben Luft aus der Leitung 39 auch einen Teil des Entspannungsdampfes durch die Leitung 14b zuführen und durch die Leitung 49 Abfallstoffe sowie Teere und Phenole aufgeben.

Das Produktgas, das die Wirbelbettvergasung in der Leitung 34 verläßt, enthält Wasserdampf und ist praktisch frei von Phenolen und Fettsäuren. Es wird in einem Abhitzekessel 40 gekühlt, wobei Kondensat anfällt, das man in der Leitung 41 abzieht und nach bekannter Wasseraufbereitung als Kühl- oder Speisewasser verwenden kann. Das gekühlte Gas kann man getrennt vom Gas der Leitung 11 weiterverarbeiten. Für die in der Zeichnung dargestellte gemeinsame Verarbeitung komprimiert man das vom Abhitzekessel 40 kommende Produktgas im Kompressor 42 etwa auf den in der Leitung 11 herrschenden Druck und führt die Gase gemeinsam durch einen Wärmeaustauscher 43. Erwärmtes Gas führt man in der Leitung 44 zu einer an sich bekannten Konvertierung 45, wo man einen Teil des Wassergehaltes durch die Reaktion $CO + H_2O \longrightarrow CO_2 + H_2$ aufbraucht. Ein zu diesem Zweck geeignetes Konvertierungsverfahren ist in der DE-OS 27 09 768 und dem dazu korrespondierenden US-Patent 4 161 393 beschrieben. Das konvertierte Gas gibt einen Teil seiner Wärme im Wärmeaustauscher 43 ab und wird anschließend im Wärmeaustauscher 46 indirekt gekühlt. Dabei entsteht Kondensat, das in der Leitung 47 abgeführt wird. Konvertiertes Gas kann nun z.B. zu Synthesezwecken weiterverwendet und zunächst einer Feinreinigung unterzogen werden.

<u>B e i s p i e l</u> :

In einer der Zeichnung entsprechenden Verfahrensführung wird folgendermaßen gearbeitet:

In den Wanderbettvergaser 1 werden 2500 kg Hartbraunkohle mit einem Aschegehalt von 12% und einem Feuchtigkeitsgehalt von 28% eingebracht und mit 350 m$^3$ Sauerstoff und 2300 kg Wasserdampf bei 30 bar vergast. (Alle m$^3$ sind Normalkubikmeter.) Dabei entstehen 2900 m$^3$ Rohgas (trocken) mit folgender Gasanalyse:

| | | |
|---|---|---|
| $CO_2$ | 30 | Vol.% |
| $CO$ | 20 | " |
| $H_2$ | 38 | " |
| $CH_4$ | 11 | " |
| $N_2$ | 1 | " |
| | 100 | Vol.% |

Außerdem enthält das Rohgas am Gasaustritt des Gaserzeugers 1 bei einer Temperatur von 300°C 1700 kg Wasserdampf und 127 kg Teer, Öl, Phenole und andere Schwelprodukte. Das Rohgas wird im Waschkühler 6 über die Leitung 7 mit 5799 kg Gaswasser gewaschen und gekühlt und über die Leitung 8 zusammen mit dem Gaswasser dem Abhitzekessel 9 zugeführt. Das Gas verläßt den Abhitzekessel 9 mit einer Temperatur von 170°C und enthält noch 870 kg Wasserdampf. Im Abhitzekessel werden 1178 kg Sattdampf von 6 bar erzeugt und über die Leitung 20 abgeführt. Mit einer Temperatur von 180°C fließen über die Leitung 12 6629 kg Gaswasser ab, die sich zusammensetzen aus 5799 kg Kreislaufgaswasser aus Leitung 7 und 830 kg Gaswasser, das aus dem Rohgas im Waschkühler und Abhitzekessel auskondensiert worden ist. Dieses Gaswasser fließt dem Entspannungsbehälter 13 zu, in dem es von etwa 30 bar auf 2,5 bar entspannt wird. Es entstehen 700 kg Entspannungsdampf, der außer Wasserdampf noch 6 kg Phenole, 1,5 kg Fettsäuren und 6 kg Ammoniak in Dampfform enthält. Dieses Dampfgemisch wird durch die Leitung 14 der Wirbelbettvergasung 15 zugeleitet.

Aus dem Entspannungsbehälter 13 werden über die Pumpe 18 5799 kg Gaswasser auf 32 bar gebracht und durch den Wärmeaustauscher 19, der mit Sattdampf aus dem Abhitzekessel 9 versorgt wird, von 127°C auf 147°C erwärmt. Dieses so erwärmte Gaswasser wird in den Waschkühler 6 eingeleitet und verläßt den Sumpf des Abhitzekessels 9 zusammen mit den auskondensierten Dämpfen aus dem Rohgas mit 180°C. Dieser Kreislauf ist somit geschlossen.

130 kg Gaswasser, das Teer enthält, werden durch die Leitung 21 einem Teer-Gaswasser-Scheider 22 zugeführt. In diesem Behälter herrscht etwa atmosphärischer Druck. Bei der Entspannung entstehende Dämpfe werden im Kühler 24 kondensiert. Über die Leitung 23 wird das Gaswasser z.B. einer Phenolextraktion und einer nachfolgenden biologischen Reinigung zugeführt, staubhaltiger Teer wird in der Leitung 26 abgezogen.

Das bisher erläuterte Schema entspricht der klassischen Wanderbettvergasung nach dem LURGI-Druckvergasungsverfahren, wobei jedoch das in der Leitung 23 abgezogene Gaswasser nur noch 15% der Gaswassermenge ist, die bei bekannter Verfahrensführung anfällt. Das jetzt angewendete Verfahren enthält genügend Flexibilität, diese abgestoßene Gaswassermenge zu verkleinern oder zu vergrößern und entsprechend die Menge an Entspannungsdampf über die Leitung 14 zu vergrößern und zu verkleinern. Dieses verdampfte Gaswasser wird dem Wirbelbettreaktor 15 zugeführt.

Im vorliegenden Beispiel wird die Wirbelbettvergasung 15 als zirkulierende Wirbelschicht betrieben, wobei im Beispiel nur eine Teilvergasung stattfindet und der Restkoks der nachgeschalteten Wirbelbettverbrennung 38 über die Leitung 37 zugeführt wird. Dem Wirbelbettreaktor 15 werden 1400 kg feinkörnige Hartbraunkohle mit 14,3% Feuchtigkeit und 14,3% Asche zugeführt und mit Hilfe von 365 m$^3$ Sauerstoff bei etwas über atmosphärischem Druck vergast. Für die Durchführung der eigentlichen Vergasung werden außerdem 350 kg Wasserdampf benötigt. Dieser Dampf und weitere 350 kg Dampf werden über die Leitungen 14 und 14a aus den Entspannungsdämpfen der Wanderbettvergasung zur Verfügung gestellt. Es entstehen bei einer Gasaustrittstemperatur von etwa 1000°C 1450 m$^3$ Rohgas (trocken) mit folgender Gasanalyse:

| | | |
|---|---|---|
| $CO_2$ | 23 | Vol.% |
| $CO$ | 30 | " |
| $H_2$ | 42 | " |
| $CH_4$ | 3 | " |
| $N_2$ | 2 | " |
| | | 100 Vol.% |

Das Rohgas enthält außerdem noch 769 kg Wasserdampf. Es verläßt über die Leitung 32 und den Zyklonabscheider 33 den Gaserzeuger 15. Der im Zyklon 33 abgeschiedene Koks wird über

0119648

die Leitungen 35 und 36 zurückgeführt und ein Teil des Kokses wird über die Leitung 37 der Wirbelbettverbrennung 38 zugeleitet. In diesem Beispiel werden 490 kg Koks, die 200 kg Asche enthalten, dort verbrannt.

Das Rohgas der Leitung 34 wird im Abhitzekessel 40 abgekühlt und dessen fühlbare Wärme zur Dampferzeugung ausgenutzt. Bei der Abkühlung werden 677 kg Wasserdampf auskondensiert. Dieses Wasserkondensat enthält keine organischen Bestandteile, wie Phenole, mehr. Wegen des Kontaktes mit Aschebestandteilen während der Abkühlung kann es allenfalls einige anorganische Bestandteile, wie Kalk oder auch etwas Chlor enthalten. Es entspricht damit in seiner Qualität dem Frischwasser, wie es als Oberflächenwasser oder Grundwasser ansonsten für die Wasserversorgung eingesetzt wird.

Über den Kompressor 42 werden die 1450 $m^3$ Rohgas, die noch 92 kg $H_2O$ enthalten, auf den Druck des Gases aus der Wanderbettvergasung komprimiert und mit diesem Gas gemischt. Die gesamte Gasmenge aus dem Abhitzekessel 9 und vom Kompressor 42 beträgt 4350 $m^3$ Rohgas (trocken) folgender Zusammensetzung:

| | | |
|---|---|---|
| $CO_2$ | 28,3 | Vol.% |
| CO | 22,4 | " |
| $H_2$ | 39,7 | " |
| $CH_4$ | 8,3 | " |
| $N_2$ | 1,3 | " |
| | 100,0 | Vol.% |

Dieses Gas enthält außerdem noch 962 kg Wasserdampf.

Das $H_2$/CO-Verhältnis dieses Gases ist für die Verwendung z.B. als Synthesegas für die Methanherstellung zu niedrig. Deswegen ist eine Konvertierung nachgeschaltet, wobei für die katalytische Konvertierungsreaktion CO + $H_2O \longrightarrow CO_2 + H_2$ der im Rohgas enthaltene Wasserdampf benutzt wird. Das Mischgas wird über einen Gas/Gas-Wärmetauscher 43 durch die Leitung 44 dem mit Katalysator gefüllten Reaktor 45 zugeführt. Die Konvertierungsreaktion verbraucht Wasserdampf und es werden dabei

11

auch Schwelprodukte hydriert. Im Kühler 47 wird das Gas abgekühlt und es fallen dabei 723 kg Gaswasser an, dessen Gehalt an Schwelprodukten, insbesondere Phenole, geringer ist als beim Eintritt in die Konvertierung 45.

Die folgende Wasserbilanz für dieses Beispiel zeigt, wie erfolgreich die neue Verfahrensweise ist.

Wasserbilanz

Die Gesamtanlage verbraucht an Wasserdampf für die Vergasung 2000 kg von 35 bar und 500°C.

In der Gesamtanlage werden folgende Mengen an Gaswasser erzeugt und verbraucht:

Anlagenteil Wanderbettvergasung 1

| | |
|---|---:|
| Gaswasser im Gas am Austritt des Wanderbettvergasers 1 | + 1700 kg |
| als Entspannungsdampf an die Wirbelbettvergasung 15 | |
| abgegeben | − 700 kg |
| a) stark phenolhaltiges Gaswasser in der Leitung 23 | − 130 kg |
| Wasserdampfverbrauch in der Konvertierung 45 | − 239 kg |
| Außerdem werden der Konvertierung 45 noch Wasser | |
| im Gas der Wirbelbettvergasung zugeführt | + 92 kg |
| b) schwach phenolhaltiges Gaswasser aus dem Kühler 47 | + 723 kg |

Anlagenteil Wirbelbettvergasung 15

| | |
|---|---:|
| Gaswasser zugeführt als Entspannungsdampf durch die Leitung 14 | + 700 kg |
| Restfeuchtigkeit der Kohle aus der Leitung 30 | + 69 kg |
| zusammen | + 769 kg |
| c) Abgeführt als reines Wasserkondensat ohne organische Bestandteile über Leitung 41 | − 677 kg |
| restliches Gaswasser im Gas hinter dem Kommpressor 42 | + 92 kg |

Gaswasser, das weiterbehandelt werden muß, kommt

| | |
|---|---:|
| aus der Leitung 23 | 130 kg |
| aus dem Kühler 47 | 723 kg |
| zusammen | 853 kg |

Das Kondensat aus der Leitung 41 (677 kg) ist kein Gaswasser mehr, sondern Frischwasser für die Wasserversorgung.

Statt 1700 kg in einer Anlage ohne Wirbelbettvergasung 15 sind also nur noch 853 kg Gaswasser zu behandeln. Jedoch wird der Vorteil des kombinierten Verfahrens mit der Wirbelbettvergasung erst dann voll erkennbar, wenn man folgendes in Betracht zieht:

Eine Gesamtanlage, bestehend aus der Wanderbettvergasung 1 und der Wirbelbettvergasung 15 mit Wirbelbettverbrennung 38, ist in der Lage, nach einer hier nicht gezeigten Gasreinigung Synthesegas zu erzeugen, das z.B. in einer katalytischen Methanierung in 1000 $m^3$ $CH_4$ umgewandelt werden kann. Außerdem ist die Wirbelbettvergasung mit Wirbelbettverbrennung in der Lage, aus deren Abhitzekesseln den Vergasungsdampf und noch zusätzlich Wasserdampf für die Energieerzeugung zu liefern (deutsche Offenlegungsschrift 31 38 124).

Würde man das Synthesegas für die Herstellung von 1000 $m^3$ $CH_4$ nur mit der Wanderbettvergasung erzeugen, verbrauchte man:

| | |
|---|---|
| an Wasserdampf für die Vergasung | 2803 kg |
| das Rohgas am Gasaustritt des Wandebettvergasers enthält | 2383 kg Gaswasserdampf, |
| in der Konvertierung werden verbraucht | − 128 kg Wasserdampf |
| somit verbleiben an Gaswasser | 2255 kg, |

die der Phenolextraktion und biologischen Reinigung zugeführt werden müssen. Dies sind 2,64 mal mehr verschmutztes Gaswasser, als in der Verfahrensführung, die der Erfindung zugrundeliegt. Außerdem muß der Vergasungsdampf und Dampf für Antriebsturbinen beim Verfahren ohne Wirbelbettvergasung extern hergestellt werden.

P a t e n t a n s p r ü c h e

1) Verfahren zum Vergasen fester Brennstoffe mit Sauerstoff, Wasserdampf und gegebenenfalls Kohlendioxid enthaltenden Vergasungsmitteln im Wanderbett und im Wirbelbett, dabei vergast man grobkörnige feste Brennstoffe
unter einem Druck von 5 bis 150 bar im Wanderbett, das sich
langsam nach unten bewegt, in das die Vergasungsmittel von
unten eingeleitet und unter dem die unverbrennlichen mineralischen Bestandteile als feste Asche oder flüssige Schlacke
abgezogen werden, und zieht aus der Wanderbettvergasung ein
Produktgas mit Temperaturen von 250 bis 700$^{\circ}$C ab, kühlt das
Produktgas auf Temperaturen im Bereich von 120 bis 220$^{\circ}$C und
bildet dabei ein wasserhaltiges, Schwelprodukte enthaltendes
Kondensat (Gaswasser), feinkörnige feste Brennstoffe werden
im Wirbelbett bei niedrigerem als dem im Wanderbett herrschenden Druck vergast und ein Produktgas mit Temperaturen
von 800 bis 1200$^{\circ}$C erzeugt, dadurch gekennzeichnet, daß man
das Gaswasser der Wanderbettvergasung mindestens teilweise
entspannt und den gebildeten Entspannungsdampf in die Wirbelbettvergasung leitet.

2) Verfahren nach Anspruch 1, dadurch gekennzeichnet, daß
der in das Wirbelbett geleitete Entspannungsdampf den Bedarf
an Wasserdampf in der Wirbelbettvergasung mindestens zur
Hälfte deckt.

3) Verfahren nach Anspruch 1 oder 2, dadurch gekennzeichnet,
daß der in das Wirbelbett geleitete Entspannungsdampf den
Bedarf an Wasserdampf in der Wirbelbettvergasung mindestens
vollständig deckt.

4) Verfahren nach Anspruch 1 oder einem der folgenden, dadurch gekennzeichnet, daß man das Gaswasser um mindestens 2 bar bis auf einen Druck entspannt, der über dem Druck in der Wirbelbettvergasung liegt.

5) Verfahren nach Anspruch 1 oder einem der folgenden, dadurch gekennzeichnet, daß der Wirbelbettvergasung Teer und/oder Phenole zugeführt werden.

6) Verfahren nach Anspruch 1 oder einem der folgenden, dadurch gekennzeichnet, daß der im Produktgas der Wirbelbettvergasung enthaltene Wasserdampf durch Kühlung kondensiert und getrennt vom Gaswasser der Wanderbettvergasung behandelt wird.

7) Verfahren nach Anspruch 1 oder einem der folgenden, dadurch gekennzeichnet, daß man einen Teil der Feststoffe aus der Wirbelbettvergasung einer Verbrennung aufgibt und in diese Verbrennung einen Teil des Entspannungsdampfes leitet.

8) Verfahren nach Anspruch 7, dadurch gekennzeichnet, daß man der Verbrennung Teer und/oder Phenole zuführt.